# EUROPEAN PATENT SPECIFICATION

(11) **EP 2 959 116 B1**
(45) Date of publication and mention of the grant of the patent: **28.11.2018**
(21) Application number: 13811072.1
(22) Date of filing: 03.12.2013
(51) Int. Cl.: F01D 11/20, F01D 25/16, F02C 7/06, F16F 15/023, F16C 33/10

(54) **SHAFT DISPLACEMENT CONTROL**
WELLENVERLAGERUNGSSTEUERUNG
COMMANDE DE DÉPLACEMENT D'ARBRE

(30) Priority: 24.02.2013 US 201361768515 P
(43) Date of publication of application: 30.12.2015
(73) Proprietor: Rolls-Royce Corporation, Indianapolis, Indiana 46225 (US)
(72) Inventor: COPELAND, Andrew D., Greenwood, Indiana 46143 (US); COOKERLY, Alan B., Brownsburg, Indiana 46112 (US)
(74) Representative: Dauncey, Mark Peter
(86) International application number: PCT/US2013/072771
(87) International publication number: WO 2014/130121

(56) References cited:
- EP-A2- 1 298 335
- WO-A1-96/10134
- US-A- 4 971 457
- US-A- 5 839 268
- US-A1- 2009 015 085

## Description

### TECHNICAL FIELD

The present invention generally relates to control of engine shaft displacement, and more particularly, but not exclusively, to control of squeeze-film dampers used in gas turbine engines.

### BACKGROUND

Maintaining positional regulation of engine shafts remains an area of interest. Some existing systems have various shortcomings relative to certain applications. US 5839268 describes a shaft supported by a bearing having pressurized cells, EP 1298335 describes a shaft comprising a bearing metal having a hydrostatic pocket, US 2009/015085 describes a shaft supported by rotary bearings, WO 96/101134 describes a shaft having gas-pressurized chambers, and US 4971457 describes a shaft having fluid cavities surrounding a radial bearing. Accordingly, there remains a need for further contributions in this area of technology.

### SUMMARY

The present invention may comprise one or more of the following features and combinations thereof.

One embodiment of the present invention is a unique arrangement to control displacement of a shaft in a gas turbine engine. Other embodiments include apparatuses, systems, devices, hardware, methods, and combinations for controlling a squeeze-film damper through pressurizable sectors. Further embodiments, forms, features, aspects, benefits, and advantages of the present application shall become apparent from the description and figures provided herewith

One aspect of the present application provides an apparatus according to claim 1 comprising a vehicle powerplant structured to provide power and having a shaft structured to rotate with a bladed air moving device disposed within an enclosure that forms a flow path, a bearing assembly supportingly coupled with the shaft, a squeeze-film damper positioned between the bearing assembly and a housing structured to contain the bearing assembly, the squeeze-film damper having a plurality of sectors that are each in fluid communication with a fluid pressure source, wherein the sectors are a mix of circumferentially-spaced sectors and axially-spaced sectors, and a controller structured to operate upon a sensed vehicle motion and provide a fluid pressure for the plurality of sectors to influence a clearance between the bladed air moving device and the enclosure.

A feature of the present application provides wherein the plurality of sectors are circumferentially distributed around the squeeze-film damper, and which further includes a pressure regulating device capable of changing the fluid pressure in at least one of the plurality of sectors.

Another feature of the present application provides wherein the plurality of sectors are each in communication with a single fluid pressure source.

Still another feature of the present application provides wherein at least one of the sectors is bounded by an o-ring.

Yet still another feature of the present application provides wherein a maneuvering of a vehicle is sensed by one of an accelerometer and a rate gyro, and wherein the controller is structured to produce a signal to change a pressure in a sector and counteract a change in angular momentum of the vehicle powerplant.

Still yet another feature of the present application further includes a communications bus over which one of a signal representative of a sensed vehicle motion and a command issued by the controller is passed, and wherein a bandwitdth attenuates relatively high frequency vibratory modes.

A further feature of the present application provides wherein a wall member of a sector is made from PTFE.

Further features of the present application provides an apparatus wherein the vehicle powerplant is associated with a vehicle, the power provided by the vehicle powerplant provides motion associated with a plurality of axes to the vehicle, the bladed air moving device is a gas turbine engine,
the bearing assembly has a bearing housing that encloses a plurality of bearings,
the squeeze film damper is located outside of the bearing housing to provide damping using a damping working fluid, the sectors are a plurality of independent pressurizable sectors such that a first sector can have a different fluid pressure of the damping working fluid than a second sector, and the controller module is configured to receive a signal representative of the vehicle maneuvering motion and construct a command signal used to generate the difference in pressure between the first sector and the second sector; and wherein the apparatus further comprises a sensor structured to determine a maneuvering motion of the vehicle and provide the signal representative of the maneuvering motion,

One feature of the present application further includes a conduit structured to contain the damping working fluid, and which further includes a pressure regulating device responsive to the command signal from the control module to regulate pressure of the damping working fluid.

Another feature of the present application provides wherein the plurality of pressurizable sectors are arranged circumferentially around the squeeze film damper.

Still another feature of the present application further includes an o-ring used to confine the damping working fluid.

Yet still another feature of the present application further includes a plurality of valves structured to regulate pressure in the plurality of independent pressurizable sectors.

Still yet another feature of the present application provides wherein the sensor is one of a rate gyro and an accelerometer.

A further feature of the present application provides wherein the signal representative of the maneuvering motion is communicated by an aircraft flight control computer over an aircraft bus to an engine controller.

Further features of the present application provides an apparatus wherein the vehicle powerplant is associated with a vehicle, the bladed air moving device is a gas turbine engine power plant,
the sectors are partitioned to receive a pressurized damper fluid to the sectors, and the controller converts a motion signal into a sector pressure command; and wherein the apparatus further comprises a sensor package having a sensor structured to measure a motion of the vehicle and provide a motion signal.

Another aspect of the present application provides a method according to claim 12 comprising operating an internal combustion engine having a rotatable shaft, the internal combustion engine structured to provide power to a vehicle, supporting the rotatable shaft with a bearing having a squeeze-film damper, the squeeze-film damper having a plurality of separate sectors configured to retain a damper fluid, wherein the sectors are a mix of circumferentially-spaced sectors and axially-spaced sectors; developing a signal representative of a movement of the vehicle through use of a vehicle sensor, constructing a pressure command for one of the separate sectors as a function of the signal representative of vehicle movement, and supplying pressure to the one of the separate sectors as a result of the constructing.

A feature of the present application provides wherein the constructing a pressure command includes forming a plurality of pressure commands for a plurality of the separate sectors.

Another feature of the present application provides wherein the supplying includes operating a pressure regulating device, and wherein the internal combustion engine is a gas turbine engine.

Still another feature of the present application further includes transmitting a signal across a bus of the vehicle, wherein the vehicle is an aircraft.

Yet still another feature of the present application provides wherein the constructing includes accounting for rate of change of angular momentum of the internal combustion engine as a result of the movement of the vehicle.

Still yet another feature of the present application provides wherein the developing includes sensing the movement of the vehicle using one of a rotational sensor and an accelerometer.

These and other aspects of the present invention will become more apparent from the following description of the illustrative embodiment. 67430356-1-LOCONNOR

### BRIEF DESCRIPTION OF THE FIGURES

FIG. 1 depicts one embodiment of an aircraft;
FIG. 2 depicts one embodiment of a shaft and bearing; and
FIG. 3 depicts one embodiment of a squeeze film damper.

### DETAILED DESCRIPTION OF THE ILLUSTRATIVE EMBODIMENTS

For the purposes of promoting an understanding of the principles of the invention, reference will now be made to the embodiments illustrated in the drawings and specific language will be used to describe the same. It will nevertheless be understood that no limitation of the scope of the invention is thereby intended. Any alterations and further modifications in the described embodiments, and any further applications of the principles of the invention as described herein which are within the scope of appended claims are contemplated as would normally occur to one skilled in the art to which the invention relates.

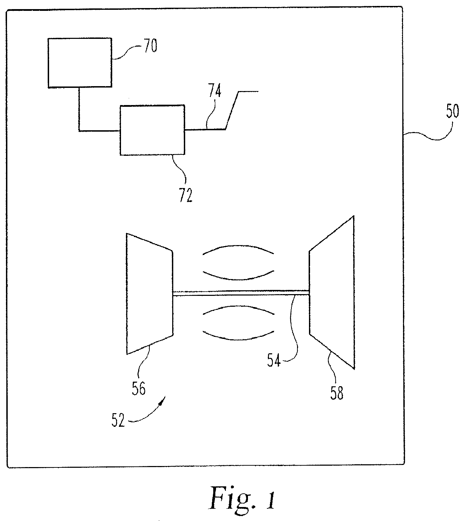

With reference to FIG. 1, an aircraft 50 is disclosed having an engine 52 capable of providing power useful with the aircraft 50, such as but not limited to propulsive power. As used herein, the term "aircraft" includes, but is not limited to, helicopters, airplanes, unmanned space vehicles, fixed wing vehicles, variable wing vehicles, rotary wing vehicles, unmanned combat aerial vehicles, tailless aircraft, hover crafts, and other airborne and/or extraterrestrial (spacecraft) vehicles. Further, the present inventions are contemplated for utilization in other applications that may not be coupled with an aircraft such as, for example, industrial applications, power generation, pumping sets, naval propulsion, land warfare vehicles, weapon systems, security systems, perimeter defense/security systems, and the like known to one of ordinary skill in the art. Thus, references herein to embodiments associated with aircraft are also intended to apply to the other applications discussed immediately above.

The engine 52 of the illustrated embodiment is depicted as a gas turbine engine but can take other forms in different embodiments. The gas turbine engine 52 is shown as including a single spool shaft 54 that is used to rotatingly couple a compressor 56 to a turbine 58. Other embodiments can include additional spool shafts such that the gas turbine engine can take a variety of forms in various embodiments. For example, the gas turbine engine can take the form of a turbojet, turboprop, turboshaft, and turbofan engine. In some embodiments the gas turbine engine 52 can be a variable and/or adaptive cycle engine. The gas turbine engine 52 can furthermore include additional shafts such as power off-take shafts to set forth just one non-limiting example. Embodiments described below with regard to the spool shaft 54 are also applicable to other types of shafts unless explicitly indicated to the contrary.

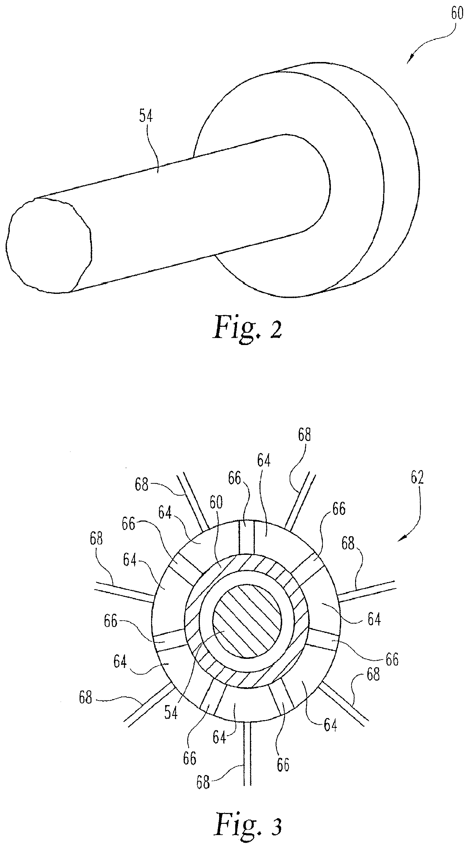

Turning to FIGS. 2 and 3, the shaft 54 is supported through use of a bearing 60 which can take a variety of forms such as, but not limited to, a rolling-element bearing. The bearing 60 is coupled with a squeeze-film damper 62 that in one form is located radially outward from a bearing contact, such as a contact between a shaft and a bearing race. FIG. 3 depicts a view of the shaft 54, bearing 60, and damper 62. The damper 62 is shown as being partitioned into sectors 64 distributed around the bearing 60. The sectors 64 are partitioned in the illustrated embodiments using one or more wall members 66.

The wall members 66 can be arranged in a variety of orientations, can include a variety of cross sectional shapes, and can be made of a variety of materials. In one non-limiting embodiment the wall members 66 can be made of a polymer substance such as, but not limited to, polytetrafluoroethylene or PTFE, but other material types are also contemplated. The wall members 66 can be resilient and capable of withstanding motion of a bearing surface component during rotation of the shaft 54. In one non-limiting embodiment the wall members 66 take the form of an o-ring glued into place.

The wall members 66 are distributed around the bearing 60 to create circumferentially spaced sectors 64 as shown in the illustrated embodiment of FIG. 3, but other arrangements are also contemplated. Though the illustrated embodiment depicts seven separate sectors, some embodiments may include only four sectors. Any number of sectors can be used in various embodiments.
The wall members 66 also extend around the circumference to create axially-spaced sectors 64. Not all sectors 64 need be the same size and/or orientation. The damper 62 includes a mix of circumferentially-spaced sectors 64 and axially-spaced sectors 64. Any number of other variations are also contemplated.

In one non-limiting embodiment the wall members 66 are rectilinear in cross section, but other shapes are also contemplated herein. For example, the wall members 66 can be circular. In some embodiments the cross sectional shape of the wall members 66 can change over the length of the wall member. In some embodiments the wall members 66 can extend in a linear direction, but other embodiments the wall members 66 can include one or more curves.

The sectors 64 are structured to hold a damper fluid that can take any variety of forms and that is capable of being pressurized. In one non-limiting embodiment the damper fluid is oil, but other fluid types are also contemplated herein. The sectors 64 can be pressurized via conduits 68. Though all sectors 64 in FIG. 3 are shown as coupled with a conduit 68, not all embodiments need include a conduit 68 for each sector 64. In some embodiments a given sector 64 can be pressurized to a relatively high pressure and another sector 64 pressurized to a relatively low pressure. Not all sectors 64 need be independently controllable. Thus, the pressure in some sectors 64 can be dependent on the pressure in other sectors 64.

In some embodiments a pressure regulator can be disposed between a pressure source and the sectors 64. The pressure regulator can take the form of a valve that can include one or more moveable features that can be positioned to raise or lower pressure in the working fluid received by the sector 64. In other embodiments the pressure regulator can take the form of a pump which can be used to raise or lower pressure in the working fluid. The pump can be a variable speed pump that is regulated to change pressure received in the sector 64. In still other additional and/or alternative embodiments a valve can be coupled with a pump. A single pump can be associated with individual valves for each conduit 68 in some embodiments, while in other embodiments multiple pumps and valves can be used with multiple sectors 64. In short, any number of combinations of valves, pumps, etc. can be used. Additional mechanisms useful to adjust pressure to each of the sectors are also contemplated.

The aircraft 50 described above in FIG. 1 can be operated at a variety of speeds and includes a sensor 70 and controller 72. The sensor 70 can be used to measure aircraft flight condition such as aircraft rotational rates, velocities, position, and accelerations, to set forth just a few non-limiting examples. In one form the sensor 70 is used to measure rigid body motion. Rigid body motion will be understood as a type of motion that, when sensed, can be used in flight control feedback systems. Although the sensors may have the bandwidth, resolution, etc. to sense aircraft vibratory motions, the information from those sensors can be primarily intended to be used in the control or sensing of aircraft rigid body motions such as pitch rate, roll rate, yaw rate, longitudinal acceleration, lateral acceleration, and vertical acceleration.

The sensor 70 can output any variety of data whether sensed or calculated and can provide information to the controller 72 in either analog or digital form. In one non-limiting example shown in the figure, the sensor 70 can pass information to the controller 72 via a bus 74, but in other embodiments the sensor 70 can pass information using other techniques such as, but not limited to, shared memory in an integrated flight control computer/inertial navigation system. The bus 74 can be any variety of bus types including MIL-STD-1553, MIL-STD-1773, as well as any other type of communications protocol to transfer sensed information, controller commands, etc. between components associated with the aircraft 50.

The controller 72 can be provided to monitor and control engine operations and/or flight control operations. The controller 72 can be comprised of digital circuitry, analog circuitry, or a hybrid combination of both of these types. Also, the controller 72 can be programmable, an integrated state machine, or a hybrid combination thereof. The controller 72 can include one or more Arithmetic Logic Units (ALUs), Central Processing Units (CPUs), memories, limiters, conditioners, filters, format converters, or the like which are not shown to preserve clarity. In one form, the controller 72 is of a programmable variety that executes algorithms and processes data in accordance with operating logic that is defined by programming instructions (such as software or firmware). Alternatively or additionally, operating logic for the controller 72 can be at least partially defined by hardwired logic or other hardware. In one particular form, the controller 72 is configured to operate as a Full Authority Digital Engine Control (FADEC); however, in other embodiments it may be organized/configured in a different manner as would occur to those skilled in the art. It should be appreciated that controller 72 can be exclusively dedicated to controlling pressure in each of the sectors 64 through actuation of a valve or pressure regulator during aircraft maneuvering. In other forms the controller 72 can be used in the regulation/control/activation of one or more other subsystems or aspects of aircraft 50.

The controller 72 can include a control architecture that can take a variety of forms, such as, but not limited to, classical controller, modern controller, robust controller, etc. To set forth just a few non-limiting examples, the controller 72 can be a proportional controller, a proportional-derivative controller, a proportional-integral controller, a model based controller, a dynamic inversion controller, an LQR controller, and a µ-synthesized controller, among any number of other controller types. In some applications one or more gains of the controller 72 can be scheduled as a function of any number of variables. Some gains can be constant in some applications, while in still further applications the controller can include a mix of fixed and variable gains. Persons of skill in the art will understand that selection of controller architecture, gains, filter constants, etc. can be accomplished through design efforts that use models of system dynamics, actuators, sensors, etc. as well as desired performance and stability metrics such as rise, time, settling time, gain margin, etc. In one non-limiting embodiment, the controller 72 can be a proportional controller having multiple inputs and outputs. Among the inputs in any given embodiment of the controller 72 can be any selection or combination of the three rigid body axis rates and accelerations, and the outputs are associated with each of the individual controllable sectors 64. The controller 72 can be single-input-single-output, multi-input-single-output, single-input-multi-output, and multi-input-multi-output systems. The output or outputs can be a fixed gain blending of the inputs, but other variations are also contemplated.

In some additional and/or alternative embodiments, the bandwidth of the controller, sensor, pressure regulator, communication bus, etc., or a combination thereof, can be such that relatively high frequency vibratory modes are rolled-off and relatively low frequency rigid body motions are retained. Not all embodiments need include such a roll-off effect, however. The controller can but need not respond to the high frequency vibratory modes and as such properties in one or more of the sensor, controller, actuation device, communication bus, etc. can attenuate such information. In some embodiments dynamic elements such as high-pass filters can be incorporated to assist in rolling-off relatively high frequency information.

In some applications a shaft of the gas turbine engine can be supported at different locations with separate bearing constructions. The controller, therefore, can take on a different architecture, gain schedule, etc. depending upon the location of the separate bearing constructions.

The controller 72 can be structured to account for the rotational affects of the gas turbine engine. For example, a gas turbine engine having a relatively high angular momentum will react to a change in orientation of the engine as a result of vehicle maneuvering according to well known physical principles.

The pressures in each of the sectors 64 can be controlled through a pressure regulator by the controller 72 to prevent the squeeze-film damper from being positionally disturbed. For example, the thickness across the sectors 64 can be maintained in part or whole by appropriate application of pressure as the bearing 60, or structured coupled thereto, changes position as a result of the maneuvering causing the sectors to change shape. The pressures in one or more of the sectors 64 can be changed to maintain an approximate positioning of the bearing race to the bearing housing in those embodiments. In some situations a vehicle maneuvering can cause loads that disturb the gas turbine engine shaft, and associated bearing support, to deflect in a given direction. In some cases the loads can cause the bearing support to "bottom-out" and contact a side of the damper housing, thus eliminating a thickness in one or more of the sectors.

In various of the forms described above, the pressures in one or more of the sectors 64 can be used to counteract the vehicle maneuvering loads to reject the disturbance in the size/shape/etc. of the squeeze-film damper. For example, the pressures can be used to partially or completely reject the disturbance to maintain a thickness profile around the circumference of the squeeze-film damper.

Vehicle maneuvering includes accelerations and rotations about any of the vehicle axes. For example, the vehicle can be accelerated by an increase in thrust provided by the gas turbine engine. When in the form of an aircraft, a pilot of the vehicle can command a pitch or roll maneuver, to set forth just two non-limiting examples. Any variety of motions about any of the vehicles axes, whether alone or in combination, can be used with the controller 72 to regulate pressures in the sectors 64 to control and/or influence the size of the sector. In one form the controller 72 is used to prevent the bearing 60 from contacting the housing as a result of the sector 64 losing its thickness. Such a scheme can be used to prevent and/or discourage blade tip contact.

While the invention has been illustrated and described in detail in the drawings and foregoing description, the same is to be considered as illustrative and not restrictive in character, it being understood that only the preferred embodiments have been shown and described herein. It should be understood that while the use of words such as preferable, preferably, preferred or more preferred utilized in the description above indicate that the feature so described may be more desirable, it nonetheless may not be necessary and embodiments lacking the same may be contemplated as within the scope of the invention, the scope being defined by the claims that follow. In reading the claims, it is intended that when words such as "a," "an," "at least one," or "at least one portion" are used there is no intention to limit the claim to only one item unless specifically stated to the contrary in the claim. When the language "at least a portion" and/or "a
portion" is used the item can include a portion and/or the entire item unless specifically stated to the contrary.

## Claims

1. An apparatus comprising:
a vehicle powerplant structured to provide power and having a shaft (54) structured to rotate with a bladed air moving device disposed within an enclosure that forms a flow path;
a bearing assembly (60) supportingly coupled with the shaft;
a squeeze-film damper (62) positioned between the bearing assembly (60) and a housing structured to contain the bearing assembly, the squeeze-film damper (62) having a plurality of sectors (64) that are each in fluid communication with a fluid pressure source, wherein the sectors (64) are a mix of circumferentially-spaced sectors and axially-spaced sectors; and
a controller (72) structured to operate upon a sensed vehicle motion and provide a fluid pressure for the plurality of sectors (64) to influence a clearance between the bladed air moving device and the enclosure.

2. The apparatus of claim 1, wherein the plurality of sectors (64) are circumferentially distributed around the squeeze-film damper (62), and which further includes a pressure regulating device capable of changing the fluid pressure in at least one of the plurality of sectors, optionally wherein the plurality of sectors are each in communication with a single fluid pressure source.

3. The apparatus of claim 1, wherein at least one of the plurality of sectors (64) is bounded by an o-ring.

4. The apparatus of claim 1, wherein a maneuvering of a vehicle is sensed by one of an accelerometer and a rate gyro, and wherein the controller (72) is structured to produce a signal to change a pressure in a sector (64) and counteract a change in angular momentum of the vehicle powerplant, optionally the apparatus further includes a communications bus over which one of a signal representative of a sensed vehicle motion and a command issued by the controller is passed, and wherein a bandwidth attenuates relatively high frequency vibratory modes.

5. The apparatus of claim 1, wherein a wall member (66) of one of the plurality of sectors is made from PTFE.

6. The apparatus of claim 1 wherein:
the vehicle powerplant is configured to be associated with a vehicle;
the power provided by the vehicle powerplant, provides motion associated with a plurality of axes to the vehicle;
the bladed air moving device is a gas turbine engine (52);
the bearing assembly has a bearing housing that encloses a plurality of bearings;
the squeeze-film damper (62) is located outside of the bearing housing to provide damping using a damping working fluid;
the sectors (64) are a plurality of independent pressurizable sectors (64) such that a first sector can have a different fluid pressure of the damping working fluid than a second sector; and
the controller (72) is configured to receive a signal representative of the vehicle maneuvering motion and construct a command signal used to generate the difference in pressure between the first sector and the second sector; and
wherein the apparatus further comprises a sensor (70) structured to determine the maneuvering motion of the vehicle when the apparatus is installed in the vehicle and provide the signal representative of the maneuvering motion.

7. The apparatus of claim 6, which further includes a conduit (68) structured to contain the damping working fluid, and which further includes a pressure regulating device responsive to the command signal from the control module (72) to regulate pressure of the damping working fluid.

8. The apparatus of claim 7, wherein the plurality of pressurizable sectors are arranged circumferentially around the squeeze-film damper, optionally wherein the signal representative of the maneuvering motion is communicated by an aircraft flight control computer over an aircraft bus to an engine controller when the apparatus is installed in an aircraft.

9. The apparatus of claim 7, which further includes an o-ring used to confine the damping working fluid.

10. The apparatus of claim 6: (i) which further includes a plurality of valves structured to regulate pressure in the plurality of independent pressurizable sectors; or (ii) wherein the sensor (70) is one of a rate gyro and an accelerometer.

11. The apparatus of claim 1 wherein:
the vehicle powerplant is configured to be associated with a vehicle;
the bladed air moving device is a gas turbine engine power plant;
the squeeze-film damper (62) provides damping to the shaft;
the sectors (64) are partitioned to receive a pressurized damper fluid to the sectors; and
the controller (72) converts a motion signal into a sector pressure command; and
the apparatus further comprising a sensor package having a sensor (70) structured to measure the motion of the vehicle when the apparatus is installed in the vehicle and provide the motion signal.

12. A method comprising:
operating an internal combustion engine having a rotatable shaft (54), the internal combustion engine structured to provide power to a vehicle;
supporting the rotatable shaft (54) with a bearing (60) and a squeeze-film damper (62) positioned between the bearing assembly (60) and a housing structured to contain the bearing assembly, the squeeze-film damper having a plurality of separate sectors (64) configured to retain a damper fluid, wherein the sectors (64) are a mix of circumferentially-spaced sectors and axially-spaced sectors;
developing a signal representative of a movement of the vehicle through use of a vehicle sensor;
constructing a pressure command for one of the separate sectors as a function of the signal representative of vehicle movement; and
supplying pressure to the one of the separate sectors as a result of the constructing.

13. The method of claim 12, wherein: (i) the constructing a pressure command includes forming a plurality of pressure commands for a plurality of the separate sectors; or (ii) the supplying includes operating a pressure regulating device, and wherein the internal combustion engine is a gas turbine engine.

14. The method of claim 12, which further includes transmitting a signal across a bus of the vehicle, wherein the vehicle is an aircraft.

15. The method of claim 12, wherein: (i) the constructing includes accounting for rate of change of angular momentum of the internal combustion engine as a result of the movement of the vehicle; or (ii) the developing includes sensing the movement of the vehicle using one of a rotational sensor and an accelerometer.

## Patentansprüche

1. Vorrichtung, umfassend:
ein Fahrzeugantriebssystem, welches zum Antreiben strukturiert ist und eine Welle (54) aufweist, welche zum Drehen mit einer geschaufelten Luftbewegungsvorrichtung innerhalb eines Gehäuses strukturiert ist, welches einen Strömungsweg bildet;
eine Lageranordnung (60), welche mit der Welle tragend verbunden ist;
einen Quetschfilm-Dämpfer (62), welcher zwischen der Lageranordnung (60) und einem Gehäuse angeordnet ist, welches zur Aufnahme der Lageranordnung strukturiert ist, wobei der Quetschfilm-Dämpfer (62) eine Mehrzahl von Sektoren (64) aufweist, welche jeweils mit einer Fluiddruckquelle fluidisch kommunizieren, wobei die Sektoren (64) eine Kombination aus umfangsseitig beabstandeten Sektoren und axial beabstandeten Sektoren sind; und
eine Steuerung (72), welche strukturiert ist, um beim Erfassen einer Fahrzeugbewegung zu operieren und einen Fluiddruck für die Mehrzahl von Sektoren (64) bereitzustellen, um ein Spiel zwischen der geschaufelten Luftbewegungsvorrichtung und dem Gehäuse zu beeinflussen.

2. Gerät nach Anspruch 1, wobei die Mehrzahl von Sektoren (64) umfangsseitig um den Quetschfilm-Dämpfer (62) verteilt ist und ferner eine Druckreguliervorrichtung umfasst, welche den Fluiddruck in zumindest einem der Mehrzahl von Sektoren verändern kann, optional wobei die Mehrzahl von Sektoren jeweils mit einer einzelnen Fluiddruckquelle kommunizieren.

3. Gerät nach Anspruch 1, wobei zumindest einer der Mehrzahl von Sektoren (64) durch einen O-Ring begrenzt ist.

4. Gerät nach Anspruch 1, wobei das Manövrieren eines Fahrzeugs durch einen von einem Beschleunigungsmesser und einem Gyrometer erfasst wird, und wobei die Steuerung (72) strukturiert ist, um ein Signal zu erzeugen, um einen Druck in einem Sektor (64) zu ändern und einer Änderung des Drehmoments des Antriebssystems des Fahrzeugs entgegenzuwirken, optional wobei das Gerät ferner einen Kommunikationsbus umfasst, über welchen eines von einem Signal, das eine erfasste Fahrzeugbewegung und einem von der Steuerung ausgegebenen Befehl geleitet wird, und wobei die Bandbreite relativ hochfrequente Frequenzvibrationsmodi dämpft.

5. Gerät nach Anspruch 1, wobei ein Wandelement (66) eines der Mehrzahl von Sektoren aus PTFE besteht.

6. Gerät nach Anspruch 1, wobei:
das Fahrzeugantriebssystem konfiguriert ist, um einem Fahrzeug zugeordnet zu werden;
die vom Fahrzeugantriebssystem bereitgestellte Leistung die Bewegung einer Mehrzahl von Fahrzeugachsen bereitstellt;
die geschaufelte Luftbewegungsvorrichtung ein Gasturbinenmotor (52) ist;
die Lageranordnung ein Lagergehäuse aufweist, welches eine Mehrzahl von Lagern umschließt;
der Quetschfilm-Dämpfer (62) außerhalb des Lagergehäuses angeordnet ist, um durch ein dämpfendes Arbeitsfluid zu dämpfen;
die Sektoren (64) eine Mehrzahl von unabhängig druckbeaufschlagbaren Sektoren (64) sind, sodass ein erster Sektor einen vom zweiten Sektor unterschiedlichen Fluiddruck des Dämpfungsarbeitsfluids aufweisen kann; und
die Steuerung (72) konfiguriert ist, um ein Signal zu empfangen, welches die Fahrzeugmanöverbewegung darstellt, und ein Befehlssignal zu erstellen, welches zum Erzeugen des Druckunterschieds zwischen dem ersten Sektor und dem zweiten Sektor verwendet wird; und
wobei das Gerät ferner einen Sensor (70) umfasst, welcher strukturiert ist, um die Manöverbewegung des Fahrzeugs zu bestimmen, wenn das Gerät im Fahrzeug montiert ist und um das Signal bereitzustellen, welches die Manöverbewegung darstellt.

7. Gerät nach Anspruch 6, welches ferner eine Leitung (68) umfasst, welche strukturiert ist, um das Dämpfungsarbeitsfluid aufzunehmen, und welche ferner eine Druckreguliervorrichtung umfasst, welche auf das Befehlssignal vom Steuermodul (72) reagiert, um den Druck des Dämpfungsarbeitsfluids zu regeln.

8. Gerät nach Anspruch 7, wobei die Mehrzahl von druckbeaufschlagbaren Sektoren umfangsseitig um den Quetschfilmdämpfer angeordnet sind, optional wobei das Signal, welches die Manöverbewegung darstellt, durch einen Flugsteuercomputer über einen Luftfahrzeugbus an eine Motorsteuerung kommuniziert wird, wenn das Gerät in einem Luftfahrzeug montiert ist.

9. Gerät nach Anspruch 7, welches ferner einen O-Ring umfasst, welcher zum Begrenzen des Dämpfungsarbeitsfluids verwendet wird.

10. Gerät nach Anspruch 6: (i) welches ferner eine Mehrzahl von Ventilen umfasst, welche strukturiert sind, um den Druck in der Mehrzahl von unabhängig druckbeaufschlagbaren Sektoren zu regeln; oder (ii) wobei der Sensor (70) ein Gyrometer oder ein Beschleunigungsmesser ist.

11. Gerät nach Anspruch 1, wobei:
das Fahrzeugantriebssystem konfiguriert ist, um einem Fahrzeug zugeordnet zu werden;
die geschaufelte Luftbewegungsvorrichtung ein Gasturbinenmotorantriebssystem ist;
der Quetschfilm-Dämpfer (62) die Welle dämpft;
die Sektoren (64) unterteilt sind, um ein druckbeaufschlagtes Dämpfungsfluid für die Sektoren aufzunehmen; und
die Steuerung (72) ein Bewegungssignal in einen Sektor-Druckbefehl umwandelt; und
das Gerät ferner eine Sensorpackung mit einem Sensor (70) umfasst, welcher zum Messen der Bewegung des Fahrzeugs, wenn das Gerät auf dem Fahrzeug montiert ist, und zum Bereitzustellen des Bewegungssignals strukturiert ist.

12. Verfahren, umfassend:
Betreiben eines Verbrennungsmotors, welcher eine Drehwelle (54) aufweist, wobei der Verbrennungsmotor strukturiert ist, um Leistung an ein Fahrzeug bereitzustellen;
Lagern der Drehwelle (54) mit einem Lager (60) und einem Quetschfilm-Dämpfer (62), welcher zwischen der Lageranordnung (60) und einem Gehäuse angeordnet ist, welches strukturiert ist, um die Lageranordnung aufzunehmen,
wobei der Quetschfilm-Dämpfer eine Mehrzahl von getrennten Sektoren (64) aufweist, welche konfiguriert sind, um ein Dämpfungsfluid zurückzuhalten, wobei die Sektoren (64) eine Kombination von umfangsseitig beabstandeten Sektoren und axial beabstandeten Sektoren sind;
Entwickeln eines Signals, welches eine Bewegung des Fahrzeugs durch Verwendung eines Fahrzeugsensors darstellt;
Erstellen eines Druckbefehls für einen der separaten Sektoren als Funktion des die Fahrzeugbewegung darstellendes Signals; und
Zuführen eines Drucks an einen der separaten Sektoren als Folge des Erstellens.

13. Verfahren nach Anspruch 12, wobei: (i) das Erstellen eines Druckbefehls das Bilden einer Mehrzahl von Druckbefehlen für eine Mehrzahl der separaten Sektoren umfasst; oder (ii) das Zuführen das Betreiben einer Druckregelvorrichtung umfasst, und wobei der Verbrennungsmotor ein Gasturbinenmotor ist.

14. Verfahren nach Anspruch 12, welches ferner das Übertragen eines Signals über einen Bus des Fahrzeugs umfasst, wobei das Fahrzeug ein Luftfahrzeug ist.

15. Verfahren nach Anspruch 12, wobei: (i) das Erstellen das Berücksichtigen der Änderungsrate des Drehimpulses des Verbrennungsmotors als Folge der Bewegung des Fahrzeugs umfasst; oder (ii) das Entwickeln das Erfassen der Bewegung des Fahrzeugs durch Verwendung eines von einem Drehsensor oder einem Beschleunigungsmesser umfasst.

## Revendications

1. Appareil, comprenant :
un groupe moteur de véhicule structuré pour fournir de l'énergie et présentant un arbre (54) structuré pour tourner avec un dispositif de déplacement d'air à pales agencé au sein d'une enceinte qui forme un trajet d'écoulement ;
un ensemble palier (60) couplé à l'arbre en tant que support ;
un dispositif d'amortissement par film d'huile (62) positionné entre l'ensemble palier (60) et une enveloppe structurée pour contenir l'ensemble palier, le dispositif d'amortissement par film d'huile (62) présentant une pluralité de secteurs (64) qui sont respectivement en communication fluidique avec une source de pression de fluide, dans lequel les secteurs (64) représentant un mélange de secteurs espacés de manière circonférentielle et de secteurs espacés de manière axiale ; et
un dispositif de commande (72) structuré pour fonctionner lorsqu'un déplacement du véhicule est détecté et pour fournir une pression de fluide destinée à la pluralité de secteurs (64) afin d'influencer un jeu existant entre le dispositif de déplacement d'air à pales et l'enceinte.

2. Appareil selon la revendication 1, dans lequel la pluralité de secteurs (64) sont répartis de manière circonférentielle autour du dispositif d'amortissement par film d'huile (62), et qui comprend en outre un dispositif de régulation de pression capable de modifier la pression de fluide dans au moins un parmi la pluralité de secteurs, optionnellement dans lequel la pluralité des secteurs sont respectivement en communication avec une source de pression de fluide unique.

3. Appareil selon la revendication 1, dans lequel au moins un parmi la pluralité de secteurs (64) est délimité par une bague de roulement.

4. Appareil selon la revendication 1, dans lequel une manoeuvre d'un véhicule est détectée par un parmi un accéléromètre et un gyromètre, et dans lequel le dispositif de commande (72) est structuré pour produire un signal afin de modifier une pression dans un secteur (64) et compenser une modification de moment angulaire du groupe moteur de véhicule, l'appareil comprenant optionnellement en outre un bus de communication par lequel passe un parmi un signal représentatif d'une détection de mouvement de véhicule et une commande émise par le dispositif de commande, et dans lequel de bande passante atténue les modes vibratoires à fréquence relativement élevée.

5. Appareil selon la revendication 1, dans lequel un élément de paroi (66) de l'un parmi la pluralité de secteurs est réalisé à partir de PTFE.

6. Appareil selon la revendication 1, dans lequel :
le groupe moteur de véhicule est configuré pour être associé à un véhicule ;
l'énergie fournie par le groupe moteur de véhicule fournit au véhicule un mouvement associé à une pluralité d'axes ;
le dispositif de déplacement d'air à pales est une turbine à gaz (52) ;
l'ensemble palier présente une enveloppe de palier qui enferme une pluralité de paliers ;
le dispositif d'amortissement par film d'huile (62) est situé à l'extérieur de l'enveloppe de palier afin de fournir un amortissement à l'aide d'un fluide amortisseur ;
les secteurs (64) représentent une pluralité de secteurs (64) indépendants pouvant être mis sous pression, de sorte qu'un premier secteur peut présenter une pression de fluide du fluide amortisseur différente de celle d'un deuxième secteur ; et
le dispositif de commande (72) est configuré pour recevoir un signal représentatif du mouvement de manoeuvre du véhicule et créer un signal de commande utilisé pour générer la différence de pression entre le premier secteur et le deuxième secteur ; et
dans lequel l'appareil comprend en outre un capteur (70) structuré pour déterminer le mouvement de manoeuvre du véhicule lorsque l'appareil est installé dans le véhicule et pour fournir le signal représentatif du mouvement de manoeuvre.

7. Appareil selon la revendication 6, qui comprend en outre une conduite (68) structurée pour contenir le fluide amortisseur, et qui comprend en outre un dispositif de régulation de pression réagissant au signal de commande en provenance du module de commande (72) afin de réguler la pression du fluide amortisseur.

8. Appareil selon la revendication 7, dans lequel la pluralité de secteurs pouvant être mis sous pression sont agencés de manière circonférentielle autour du dispositif d'amortissement par film d'huile, optionnellement dans lequel le signal représentatif du mouvement de manoeuvre est communiqué à un dispositif de commande grâce à un ordinateur de commande de vol par l'intermédiaire d'un bus d'aéronef de moteur lorsque l'appareil est installé dans un aéronef.

9. Appareil selon la revendication 7, qui comprend en outre une bague de roulement utilisée pour confiner le fluide amortisseur.

10. Appareil selon la revendication 6 : (i) qui comprend en outre une pluralité de clapets structurés pour réguler la pression dans la pluralité de secteurs indépendants pouvant être mis sous pression ; ou (ii) dans lequel le capteur (70) est un parmi un gyromètre et un accéléromètre.

11. Appareil selon la revendication 1, dans lequel :
le groupe moteur de véhicule est configuré pour être associé à un véhicule ;
le dispositif de déplacement d'air à pales est un groupe moteur à turbine à gaz;
le dispositif d'amortissement par film d'huile (62) procure un amortissement à l'arbre ;
les secteurs (64) sont partitionnés de manière à recevoir un fluide amortisseur sous pression destiné aux secteurs ; et
le dispositif de commande (72) convertit un signal de mouvement en une commande de pression de secteur ; et
l'appareil comprenant en outre un agencement de détection présentant un capteur (70) structuré pour mesurer le mouvement du véhicule lorsque l'appareil est installé dans le véhicule, et pour fournir le signal de mouvement.

12. Procédé, comprenant les étapes consistant à :
faire fonctionner un moteur à combustion interne présentant un arbre rotatif (54), le moteur à combustion interne étant structuré pour fournir de l'énergie à un véhicule ;
supporter l'arbre rotatif (54) grâce à un palier (60) et à un dispositif d'amortissement par film d'huile (62) positionné entre l'ensemble palier (60) et une enveloppe structurée pour contenir l'ensemble palier,
le dispositif d'amortissement par film d'huile présentant une pluralité de secteurs (64) séparés configurés pour retenir un fluide amortisseur, dans lequel les secteurs (64) sont un mélange de secteurs espacés de manière circonférentielle et de secteurs espacés de manière axiale ;
développer un signal représentatif d'un déplacement du véhicule grâce à l'utilisation d'un capteur de véhicule ;
produire une commande de pression pour un des secteurs séparés sous la forme d'une fonction du signal représentatif de déplacement de véhicule ; et
fournir de la pression à l'un des secteurs séparés suite à ladite création.

13. Procédé selon la revendication 12, dans lequel : (i) la création d'une commande de pression comprend une étape consistant à former une pluralité de commandes de pression pour une pluralité des secteurs séparés ; ou (ii) l'étape de fourniture comprend une étape consistant à faire fonctionner un dispositif de régulation de pression, et dans lequel le moteur à combustion interne est une turbine à gaz.

14. Procédé selon la revendication 12, qui comprend en outre une étape consistant à émettre un signal passant par un bus du véhicule, le véhicule étant un aéronef.

15. Procédé selon la revendication 12, dans lequel : (i) l'étape de création comprend une étape consistant à prendre en compte la vitesse de modification de moment angulaire du moteur à combustion interne suite au déplacement du véhicule ; ou (ii) l'étape de développement comprend une étape consistant à détecter le déplacement du véhicule à l'aide d'un parmi un capteur de rotation et un accéléromètre.
